# EUROPEAN PATENT SPECIFICATION

(11) **EP 1 262 332 B1**
(45) Date of publication and mention of the grant of the patent: **14.04.2010**
(21) Application number: 02253622.1
(22) Date of filing: 23.05.2002
(51) Int. Cl.: B44F 3/00, B44F 5/00, B32B 3/00, B44C 5/00

(54) **Decorative sheet and decorative member**
Dekorfolie und Zierelement
Feuille décorative et élément décoratif

(30) Priority: 23.05.2001 JP 2001153667
(43) Date of publication of application: 04.12.2002
(73) Proprietor: DAI NIPPON PRINTING CO., LTD., Tokyo 162-8001 (JP)
(72) Inventor: Shibata, Takayuki, c/o Dai Nippon Printing Co. Ltd, Tokyo-to 162-8001 (JP)
(74) Representative: Smart, Peter John

(56) References cited:
- JP-A- 03 012 265
- US-A- 4 430 375
- US-A- 6 132 848

## Description

### BACKGROUND OF THE INVENTION

### Field of the Invention

The present invention relates to a decorative sheet (dressing sheet) and a decorative member each of which is excellent in resistances to scratch and wear and not noticeable in the grain depression.

### Description of the Related Art

A decorative sheet made using paper or a resin sheet, or a decorative member that is shaped like a plate or the like by sticking the decorative sheet onto a receptive substrate(an lamination- or adhesion-base member), has been used in various use purposes such as interior finishing materials of a building, fixtures for use in buildings, etc. And, normally, the decorative sheet or the decorative member is in many cases demanded to have resistance to scratch and resistance to wear as the surface strength. For this reason, there has hitherto been used a decorative sheet (the coated paper) and a decorative member, an entire surface of which is coated with a hard coating layer made by coating a two-liquid(two-part) curable resin, ionizing radiation curable resin, or the like at an uniform thickness, and examples thereof are as follows:
(1) Japanese Patent Application Laid-Open No. 53-64289 discloses a decorative sheet in which a hard coating layer made of a coating material comprising thermosetting urethane resin or photo-curable unsaturated polyester resin is formed on a surface of a decorative paper provided with a substrate sheet made of paper and printed with a design which may include images, patterns, symbols, letters or the like;
(2) Japanese Patent publication (B) No. 49-31033 discloses a decorative sheet in which a hard coating layer is formed on a surface of a decorative paper by hardening an unsaturated polyester resin coating material with irradiation of electron beams;
(3) Japanese Patent No. 2856862 discloses a decorative sheet in which a hard coating layer is formed on a surface of a decorative paper by hardening a coating material which is prepared by emulsion-dispersing a siliconeacrylate based lubricant into an ionizing radiation curable resin with irradiation of electron beams or the like; and,
(4) Japanese Patent No. 2740943 discloses a decorative sheet in which a hard coating layer is formed on a surface of a decorative paper by hardening a coating material which is prepared by dispersing spherical particles of α-alumina or the like into an ionizing radiation curable resin with irradiation of electron beams or the like.

However, in each of decorative sheets such as those disclosed in the above-described official gazettes, there are the following drawbacks. Namely, in the decorative sheet provided with the hard coating layer such as that described in the above official gazette (1), it had insufficient resistance to scratch and insufficient resistance to wear. Further, especially, in the case of the decorative sheet wherein the substrate sheet such as a decorative paper, a coated paper, etc. is constructed of paper and therefore is thin, when the decorative sheet is laminated or stuck onto the receptive substrate having a rough surface texture such as a ligneous substrate including lauan plywood, particle board, etc. in order to make a decorative member, the inconvenience of the so-called "grain depression" that the concavities/convexities such as conduits on the surface of the receptive substrate are embossed up to a level beyond that corresponding to the surface of the decorative sheet and inconveniently get noticeable is liable to be caused.

Further, in the decorative sheet described in the above Official Gazette (2), although the resistance to scratch and the resistance to wear are improved more than those of the decorative sheet described in the Official Gazette (1), the level of improvement is still insufficient and the grain depression is also noticeable.

Further, in the decorative sheet described in the above Official Gazette (3), the resistance to scratch and the resistance to wear are sufficiently improved compared to those of the decorative sheet described in the Official Gazette (2). However, in addition to the fact that the grain depression is noticeable, because the coating material requires a specific additive, there are also the problems that the production cost is raised and the difficulty of producing and getting is high.

And, in the decorative sheet described in the above Official Gazette (4), the resistances to scratch and wear are further greatly improved compared to those of the decorative sheet described in the Official Gazette (2). However, the grain depression is noticeable. In addition, because the coating material is specialized as well as that described in the Official Gazette (3), there are the problems that none the less the production cost is raised and difficulty of producing and getting is high.

JP-A-03012265 describes a decorative sheet in which a pattern thermoplastic resin layer is embedded in a thermoplastic base resin layer in order to create a raised pattern. The pattern resin layer must have melting point equal to or higher than that of the base resin layer. The shape formed by the pattern resin layer in the plane of the decorative sheet is not disclosed.

### SUMMARY OF THE INVENTION

The present invention has been made in view of the above-described circumstances and has an object to provide a decorative sheet such as a decorative paper, or a decorative member having it adhered thereto, in which, by using ordinary electron beam curable resin coating material but not using specific coating material, it is aimed to make the grain depression less noticeable as compared with the case of the prior art while improving the resistance to scratch and the resistance to wear as in the case of the prior art.

Whereupon, in order to solve the above-described problems, the decorative sheet according to the present invention comprises a substrate sheet and a concavo-convex pattern which is formed on the substrate sheet and is upwardly convexed when cross-sectionally viewed, characterised in that the concavo-convex pattern is composed of an aggregate of curve portions each of which is made of a crosslinkage-cured resin and formed in a continuous curve which meanders with a finite length when viewed on the plane.

As the above-described construction, it can be arranged that the resin coating provided on the surface of the decorative sheet be provided not with a thickness uniform over the entire surface but in the form of a concavo-convex pattern comprised of specific resin and a specific configuration. By doing so, the stress applied to the surface of the decorative sheet from other objects coming in contact therewith is dispersed by the concavo-convex pattern, whereby the surface can become hard to be damaged or clawed. Further, in addition to this, even if claws have been made, those claws become unlikely to get noticeable with the naked eyes, owing to the specific concavo-convex pattern of the surface. For this reason, even using ordinary crosslinkage-curable resin enables obtaining a decorative sheet having excellent resistance to scratch and resistance to wear in comparison with the conventional decorative sheet provided with the coating formed in smooth at an uniform thickness on the entire surface. In addition, even if the decorative sheet adhering to the receptive substrate causes the grain depression due to the concavities/convexities embossed up on the surface of the decorative sheet therethrough, the grain depression can be made not noticeable with the naked eyes by the concavo-convex pattern of specific configuration. Further, since the concavo-convex pattern of the surface is formed from the crosslinkage-curable resin, the resistance to stains of the surface also becomes good.

In the decorative sheet according to the present invention, the curve portion may be provided with a branch which branches off in mid course of the curve portion and meanders or does not meander.

By making the construction, it is possible to make the configuration of the curve portion a more isotropic and more random configuration through the use of the branching curve portions and, therefore, it is possible to more reliably improve the resistance to scratch and the resistance to wear while making the grain depression likely to get less noticeable.

Further, the decorative sheet according to the present invention may have a construction in which, when viewed on the plane, the width of the curve portion is in a range of from 0.1 to 1.5 mm, the diameter of the circumscribed circle encompassing the curve portion is in a range of from 1 to 10 mm, and the shortest distance between adjacent two of the curve portions is in a range of from 0.1 to 1 mm; and, when cross-sectionally viewed, the height of the curve portion is in a range of from 5 to 50 µm.

By making the construction, the concavo-convex pattern which is made fine in the specified dimensions modulates the concavities/convexities on the surface of the receptive substrate, and, in addition, the concavo-convex pattern itself also becomes more unlikely to get noticeable with the naked eyes. For this reason, it results in that the concavities/convexities on the surface of the receptive substrate are visually scattered and lost. This makes the grain depression less noticeable and enables reliably improving the resistance to scratch and the resistance to wear.

Further, the decorative sheet according to the present invention may further comprise an undercoat layer made of the crosslinkage-cured resin between the substrate sheet and the concavo-convex pattern.

By making the construction, a surface of the substrate sheet in a portion not coated with the curve portions constituting the concavo-convex pattern can be prevented from being exposed, the decrease in the resistances to scratch and wear attributable to the exposure of the substrate sheet can be prevented, and the decrease in the resistance to stains can also be prevented.

Further, the decorative sheet according to the present invention may further comprise a designed ink layer between the substrate sheet and the concavo-convex pattern, or between the substrate sheet and the undercoat layer,

By making the construction, the design made there can a higher design quality for the decorative sheet. In addition, since the design is located on the down side of the concavo-convex pattern, the resistances to scratch and wear of the design are also excellent.

Further, the decorative member according to the present invention has a construction wherein, on the receptive substrate, any one of the decorative sheets is laminated with the substrate sheet being opposed to the receptive substrate.

By making the construction, the above-described effects attainable with the respective decorative sheets used in their relevant use purposes are obtained with the respective decorative members.

### BRIEF DESCRIPTION OF THE DRAWINGS

Figs. 1A, 1B, 1C, 1D, 1E, and 1F are views each illustrating the configuration of the concavo-convex pattern according to the present invention;
Fig. 2 is an enlarged (magnified 4 times) view illustrating a concrete example of the on-the-plane viewed configuration of the concavo-convex pattern according to the present invention; and
Fig. 3 is an enlarged perspective view conceptually illustrating a form of decorative sheet which already adheres on the receptive substrate and the decorative member according to the present invention.

### DESCRIPTION OF THE PREFERRED EMBODIMENTS

Hereinafter, the present invention will be explained using an embodiment while referring to the appended drawings.

### (Outline of embodiment)

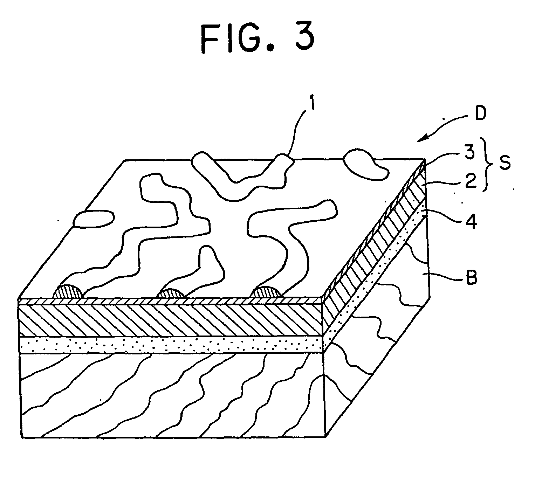

Fig. 3 is a perspective view illustrating a form of decorative sheet S (having already adhered on a receptive substrate) and a form of decorative member D. The decorative sheet S of the present invention illustrated in the figure has a construction wherein a concavo-convex pattern 1 which is made of a certain resin described below and a certain configuration also described below is formed on a substrate sheet 2 via an undercoat coating layer 3 that has been applied onto the entire surface thereof. The undercoat coating layer 3 on the substrate sheet 2 is exposed at a the portion having no concavo-convex pattern 1 (curve portion) . And, the decorative member D of the present invention illustrated in this figure has a construction wherein the decorative sheet S is adhered onto the receptive substrate B via an adhesive layer 4. It is to be noted that, in the illustrated construction of Fig. 3, a designed ink layer does not exist but this layer may be provided. In this case, from the viewpoint of the resistance to scratch and the resistance to wear, it is preferable that the designed ink layer be located on the downside of the concavo-convex pattern 1. And, in a case where the undercoat coating layer exists, the layer more preferably is located on the downside of the undercoat coating film.

Hereinafter, the present invention will be explained in more detail.

### (Concavo-convex pattern)

The convex pattern portion of the concavo-convex pattern 1 is constituted by an aggregate of convex-shaped curve portions (the curvilinear portions), each of which is a continuous curving line having a finite length and a finite width when viewed on its plane, and stands upwardly convex (in the upward direction of the illustration)when cross-sectionally viewed. Further, the curve portion meanders. Namely, the on-the-plane viewed configuration of the convex pattern portion is continuously extended and is curved alternately left and right. In other words, the centers of curvature are located alternately left and right with respect to the curved line. Further, the curve portion may have one or more line portions branching therefrom in mid course, each of which is meandering or not meandering. Further, the curve portion not meandering, i.e. a straight-line portion, may co-exist. These curve portions also are included under the category of the "curve portion" referred to in the present invention.

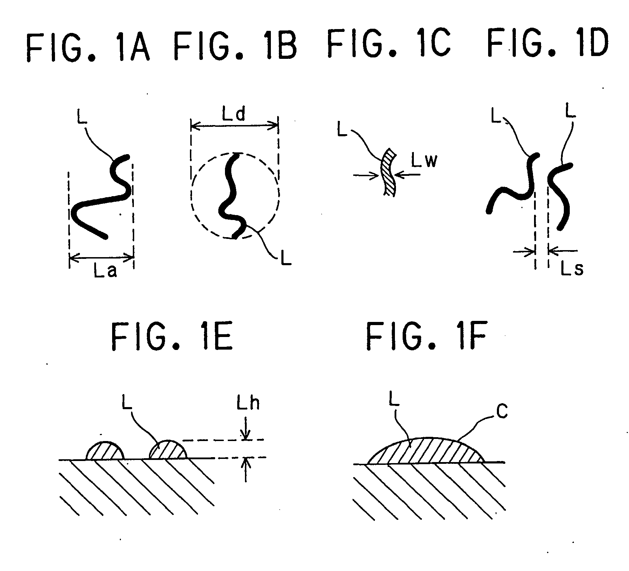

Figs. 1A to 1F are views illustrating the details of the concavo-convex pattern according to the present invention. In this figure, regarding the curve portion L, there are conceptually illustrated the width Lw [Fig. 1C], the diameter Ld of the circumscribed circle [Fig. 1B], the shortest distance Ls between adjacent two of the curve portions [Fig. 1D], the height Lh of the concavo-convex pattern [Fig. 1E], and the modulation La/2 [Fig. 1A], and the continuous curve C [Fig. 1F] that, when cross-sectionally viewed, stands upwardly convex. In these partial views, Figs. 1E and 1F are cross-sectional views and the other views are plan views.

Incidentally, the height Lh is the height of the concavo-convex pattern itself, and the height Lh of this concavo-convex pattern contributes to making the grain depression less noticeable. The over-all thickness of the crosslinkage-cured resin contributes to enhancing the resistance to wear and the resistance to scratch. Accordingly, if there exists no undercoat coating layer made using crosslinkage-cured resin, only the height Lh of the concavo-convex pattern contributes to increasing the resistance to wear and the resistance to scratch. In a case where the undercoat coating layer exists, the total thickness of the undercoat coating layer and concavo-convex pattern contributes to increasing the resistance to wear and the resistance to scratch.

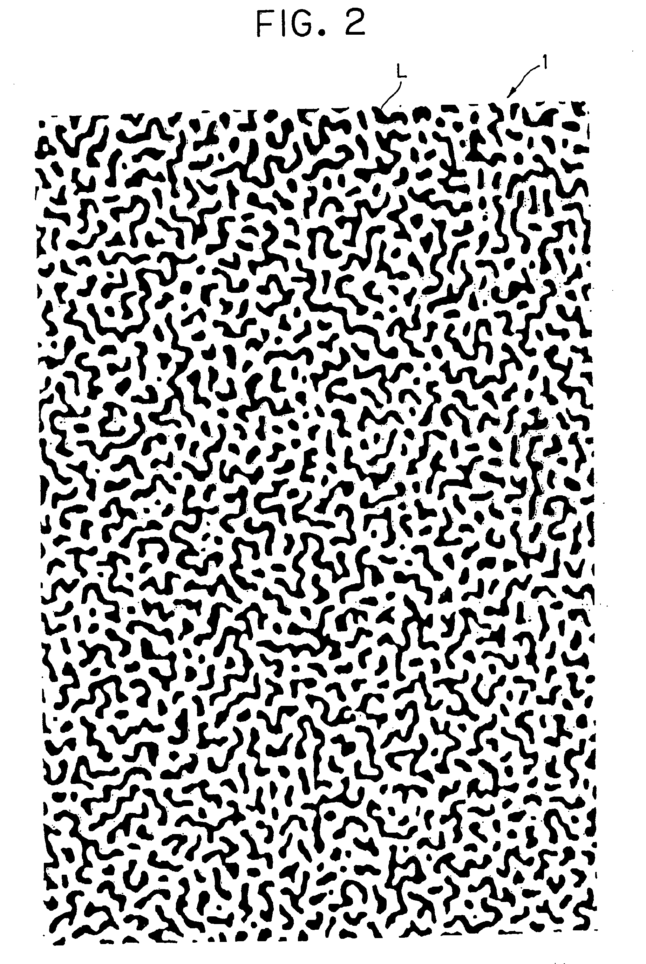

And, Fig. 2 is a view illustrating a concrete example of the on-the-plane viewed configuration of the concavo-convex pattern, which is a plan view enlarged at 4 times of magnification.

The preferable range of the size or dimension of the curve portion forming the concavo-convex pattern is as follows in terms of the function and effect of the present invention of obtaining sufficiently high resistances to scratch and wear and the effect of preventing the grain depression from becoming noticeable due to the action of the surface concavities/convexities of the receptive substrate, in comparison with the coating film made using the conventional crosslinkage-cured resin, by using the ordinary crosslinkage-cured resin for forming the concavo-convex pattern. However, if, in individual specific practical uses, the function and effect of the present invention are obtained, the numeric values may be somewhat deviated from the range.

Namely, the parameters representing the size of the concavo-convex pattern are preferably as follows. When the concavo-convex pattern is viewed on its plane, or from above it, the amplitude of the curve portion is defined to be 1/2 of the over-all amplitude (the maximum value-the minimum value) La. Namely, the amplitude La is La/2=0.5 to 5 mm; the diameter of the circumscribed circle of the curve portion Ld=1 to 10 mm (this diameter indicates the spatial spreadof the curve portion) ; the width of the curve portion Lw=0.1 to 1 mm; and the shortest distance between adjacent two of the curve portions Ls=0.1 to 1 mm, and, when the concavo-convex pattern is cross-sectionally viewed, the height Lh of the concavo-convex pattern of the curve portion is the Lh=5 to 50 µm.

Further, the configuration of the curve portion that is used in the present invention includes the following. Circular-arc curves, elliptic arc curves, function curves (or part of each of them) such as sinusoidal wave-like curve, Bessel function curve, elliptic function curve, etc., curves prepared by modulating (the amplitude, frequency, or phase) these function curves, curves prepared by combining two or more different kinds of ones of these function curves, random curves, etc. As the curves, in principle, there are used open curves, but, partially, they may include an infinite length of closed curves in the way they co-exist.

Incidentally, in the aggregate of the curve portions, the numeric values regarding individual curve portions are not always completely the same. And it is preferable that, generically, those numeric values be the randomly distributed ones that fall within the above-described numeric-value range, in terms of the merit of providing no uneven strength of the resistances to wear and scratch attributable to the concavo-convex pattern and also in terms of the merit of giving a visual feeling of non-uniformity to the concavo-convex pattern and thereby eliminating a feeling of unevenness.

The method of forming the above-described concavo-convex pattern is not particularly limited. However, it can be formed by a known printing method able to coat a sufficient film thickness of ink such as photogravure printing or silk screen printing. Further, the concavo-convex pattern can also be formed by the below-mentioned method of, after hardening the ink between a forming plate cylinder constituting a circular-cylindrical forming die and the substrate sheet, exfoliating the substrate sheet and thereby forming a concavo-convex pattern on the substrate sheet (here in this specification this method is called "the forming plate cylinder method").

The "forming plate cylinder method" is the one that is disclosed in Japanese Patent Application Laid-Open No. 57-87318, Japanese Patent publication (B) No. 57-22755, Japanese Patent publication (B) No. 63-50066, Japanese Patent Application Laid-Open No. 7-32476, etc. And the method can faithfully impart the concavo-convex configuration of the forming plate cylinder (also called "the roll concavity plate" or "shaping plate") to the cured one of ionizing radiation curable resin. Basically, this method comprises the following process steps.
(1) A circular-hollow cylindrical plate body having formed on its surfaces a configuration the same as, but reverse from the concavo-convex configuration of an object concavo-convex pattern (the concavo-convex pattern), i.e. the forming plate cylinder, is prepared, and this forming plate cylinder is rotated about its own axis.
(2) A continuous strip of substrate sheet is fed with a speed the same as the peripheral velocity of the plate cylinder.
(3) The substrate sheet and the plate cylinder are superposed one over the other and adhered to each other with a not already cured liquid composition of ionizing radiation curable resin being interposed therebetween, thereby the liquid composition is completely filled in at least the concavities portions of the plate cylinder.
(4) With the plate cylinder being kept as is, ionizing radiation is radiated to thereby crosslink and cure the liquid composition.
(5) Thereafter, the substrate sheet is exfoliated and removed together with a cured product of ionizing radiation curable resin which is adhering onto the substrate sheet and imparted with the concavo-convex pattern of the concavo-convex configuration corresponding to that of the plate cylinder.

In the above-described method, as the circular-hollow cylindrical forming plate cylinder (hereinafter also referred to simple as "the plate cylinder") serving as the forming die there may be used the one that is made using a material basically the same as, has a structure basically the same as, and is used in the manufacturing method basically the same as, in the case of a known concavity plate, photogravure plate, or embossing plate. As the material of the plate or board, there is normally used metal such as iron or copper. However, in a case where radiating ultraviolet rays or visible light rays from inside the plate cylinder, transparent material such as glass or quartz is used as the material of the plate.

For rotation driving of the plate cylinder about its own axis, there may be used a mechanism and method the same as those in the case of an ordinary rotary photogravure printing machine, rotary embossing machine, etc. For close contact of the substrate sheet onto the plate cylinder, the substrate sheet is pressed thereto by using a roller (the pressure roller) made using rubber, metal, etc. Further, when exfoliating the substrate sheet from the plate cylinder, as well, the substrate sheet is pressed by a roller (the exfoliation roller) made using metal or the like and is thereby exfoliated or peeled off. As the substrate sheet, a type of continuous strip is used in this method. This type of substrate sheet is fed out of a feed roll (the supply roll) and, after being shaped, is taken up onto a take-up roll (the paper ejection roll).

The manner to superpose the substrate sheet upon the plate cylinder and bring contact them to each other with a not already cured liquid composition of ionizing radiation curable resin interposing therebetween includes the following (1) to (3).
(1) First, a liquid composition is coated onto the substrate sheet, and then the substrate sheet is superposed upon the plate cylinder in such a way as the coated surface may be oriented toward the surface of the plate cylinder.
(2) First, the liquid composition is coated onto the plate cylinder, and then the substrate sheet is superposed on the coated surface on the plate cylinder.
(3) First, the liquid composition is coated onto each of the plate cylinder and the substrate sheet and then the substrate sheet and the plate cylinder are superposed one over the other in the way the respective coated surfaces are opposed to each other.

The manner to radiate ionizing radiation onto the not already cured liquid composition located between the plate cylinder and the substrate sheet includes the following (A) and (B) .
(A) A transparent substrate sheet is chosen with respect to ionizing radiation (for example, choosing a polypropylene substrate sheet with respect to the ultraviolet rays; and choosing a tissue with respect to the electron beam), and then the liquid composition is radiated, by ionizing radiation, from the substrate sheet side.
(B) A transparent plate cylinder is chosen with respect to ionizing radiation (for example, choosing the quartz-made plate cylinder with respect to the ultraviolet rays) and then the liquid composition is radiated from inside the plate cylinder.

To coat a not already cured liquid composition of ionizing radiation curable resin composition onto the plate cylinder or substrate sheet, a known method such as roll coating, curtain flow coating, or T-die coating may be used. Especially, in a case where coating with respect to the plate cylinder, a plate cylinder that is rotating can also be immersed (what is called "dipping") in the liquid composition in an ink pan.

Incidentally, the ionizing radiation, here, means electromagnetic waves or charged particle rays which have energy of enabling molecules to be polymerized and crosslinked, and the ionizing radiation includes ultraviolet rays, visible light rays, X-rays, electronbeams, α-rays, etc. However, ordinarily, ultraviolet rays or electron beams are used. As the ultraviolet-ray source, there is used a light source such as an ultrahigh pressure mercury lamp, a high pressure mercury lamp, a low pressure mercury lamp, a carbon arc lamp, a black light lamp, a metal halide lamp, etc. As the electron beam source, there are used various types of electron beam accelerators that include a Cockcroft-Walton type, a Van de Graft type, a resonance transformer type, an insulated core transformer type, a straight-line type, a dynamitron type, a high frequency type, etc. The source capable of emitting electrons having 100 to 1000 keV, more preferably, 100 to 300 keV of energy is used.

### (Substrate sheet)

As the substrate sheet 2, for example, paper, non-woven fabric cloth, thermoplastic resin sheet, a laminate of these materials, etc. are used.

Incidentally, as the paper, there is used, for example, tissue, kraft paper, wood-free paper, linterpaper, barytapaper, parchment paper, or Japanese paper.

Further, as the non-woven fabric cloth, there is used, for example, the one made of polyester resin, acrylic resin, nylon, vinylon, or fiber such as glass.

The basis weight of paper or non-woven fabric cloth is ordinarily to an extent of 20 to 100 g/m² or so. Further, regarding the paper or non-woven fabric cloth, in order to increase the inter-fiber, or inter-layer, strength or to prevent the scuffing, there may be further added thereto (impregnating after making the paper or filling during making the paper) resin such as acrylic resin, styrene butadiene rubber, melamine resin, or urethane resin.

Incidentally, the decorative sheet using paper (or non-woven fabric cloth also) as the substrate sheet becomes a decorative paper.

Further, for the thermoplastic resin, there may be used acrylic resin, polyester resin, polyolefin based resin, polyvinyl chloride resin, polystyrene, ABS resin, polycarbonate resin or polyamide resin.

Concretely, (1) Polyolefin-based resins such as polyethylene (high density, intermediate density, or low density), polypropylene (isotactic type, or syndiotactic type), polybutene, ethylene-propylene copolymer, ethylene-propylene-butene copolymer and olefin-based thermoplastic elastomer may be exemplified. It is to be noted that the above-described olefin-based thermoplastic elastomer can be obtained by mixing a hard segment comprised of crystalline polyolefin resin such as that taken up as an example as above and a soft segment comprised of elastomer such as ethylene-propylene rubber, ethylene-propylene-diene rubber, atactic polypropylene, styrene-budadiene rubber, or hydrogen-added styrene-butadiene rubber. The mixing ratio of the soft segment to the hard segment is [soft segment/hard segment] = 5/95 to 40/60 (mass ratio) or so. According to the necessity, the elastomer component is crosslinked with the use of the known cross-linking agent such as sulfur or hydrogen peroxide.

(2) Acrylic resins such as polymethyl (metha)acrylate, polybutyl (metha)acrylate, methyl(metha)acrylate-butyl(metha)acrylate copolymer, or methyl(metha)acrylate-styrene copolymer (provided, however, that the (metha)acrylate means acrylate or methacrylate).

(3) Polyester resins such as polyethylene terephthalate, polybutylene terephthalate, ethylene-terephthalate-isophthalate copolymer, polyethylene naphthalate, polyester-based thermoplastic elastomer or non-crystalline polyester may be exemplified. As the polyester-based thermoplastic elastomer there are block polymer using the hard segment which is a highly crystalline aromatic polyester having a high melting point and the soft segment which is a non-crystalline polyether having a glass transition temperature of -70°C or less, etc. Examples of the highly crystalline and high melting point aromatic polyester include polybutylene terephthalate while, on the other hand, examples of the the non-crystalline polyether include polytetramethylene glycol. Further examples of the non-crystalline polyester representatively include ethyleneglycol-1, 4-cychlohexenedimethanol-terephthalic acid copolymer.

(4) Examples of the other resin include polycarbonate resin, polyvinyl chloride resin, polyamide resin, polyphenylene sulfide, polyether ether ketone or the like.

The layer construction of the substrate sheet can take a single layer construction using the above-described paper, non-woven fabric cloth, thermoplastic resin sheet or the like, or a multi layer construction formed by laminating two or more different kinds of them. The thickness of the substrate sheet (the total thickness in the case of a laminate) is ordinarily in a range of from 25 to 500 µm or so.

### (Crosslinkage-cured resin)

The crosslinkage-cured resin forming the concavo-convex pattern 1 is made by crosslinking of the crosslinking-curable resin. Here, it is to be noted that the word with a suffix "-able" in the terminology, such as "curable resin" indicates that the material is in a not already cured state. On the other hand, in a case where a word has no suffix "-able", such as "a cured resin", it indicates that the material is in a crosslinkage-cured state. As the crosslinkage-curable resin, it is possible to use curable resins such as ionizing radiation curable resin or thermosetting resin (heat-curable resin). By using a crosslinlage-cured product made from the crosslinkage-curable resin, the concavo-convex pattern can be made to have excellent resistance to scratch and excellent resistance to wear.

As the ionizing radiation curable resin, concretely, there is preferably used a composition containing prepolymer (also including the so-called "oligomer") and/or monomer each of which has a radical-polymerizable unsaturated bond or a cation-polymerizable functional group in its molecule structure and capable of being crosslinkage-cured by ionizing radiation, and the composition is preferably prepared by mixing the prepolymer with the monomer. It is to be noted here that the "ionizing radiation" represents the electromagnetic waves, or charged particles, each having an energy capable of causing a crosslinkage-curing reaction between the molecules and, as the ionizing radiation, there are usually used ultraviolet rays (UV) or electron beams (EB).

Concrete examples of the prepolymer or monomer include a compound having, in its molecules, a radical polymerizable unsaturated group such as (metha)acryloyl group, (metha) acryloyloxy group or the like, or a cation-polymerizable functional group such as epoxy group. This prepolymer or monomer can be used solely or in combination of two or more kinds. It is to be noted here that, for example, the (metha) acryloyl group means acryloyl group or methacryloyl group. Further, as the ionizing radiation curable resin, there preferably is also used a prepolymer based on polyene/thiol, which stands on the combination of polyene and polythiol.

As the examples of prepolymer having a radical polymerizable unsaturated group in its molecules, there may be exemplified polyester (metha)acrylate, urethane (metha)acrylate, epoxy (metha)acrylate, melamine (metha)acrylate, triadine (metha)acrylate, silicone (metha) acrylate or the like. The prepolymer to be used usually has the molecular weight of about 250 to 100,000 or so.

As the examples of the monomer having a radical polymerizable unsaturated group in its molecules, in terms of monofunctional monomer, there may be used methyl (metha)acrylate, 2-ethylhexyl (metha)acrylate, phenoxyethyl (metha)acrylate or the like. Further, in terms of multi-functional monomer, there are diethyleneglycol di(metha)acrylate, propyleneglycol di(metha)acrylate, hexanediol (metha)acrylate, trimethylolpropane tri(metha)acrylate, trimethylolpropane ethyleneoxide tri(metha)acrylate, pentaerythritol tetra(metha)acrylate, dipentaerythritoltetra(metha)acrylate, dipentaerythritol penta (metha)acrylate, and dipentaerythritol hexa (metha)acrylate, as well.

As the examples of the pre-polymer having cation-polymerizable functional group in its molecules, there may be exemplified epoxy based resins such as bisphenol type epoxy resin, novolak type epoxy compound or the like, vinyl ether based resins such as fatty acid based vinyl ether, aromatic vinyl ether or the like.

As thiol, there may be used polythiols such as trimethylol propane trithioglycolate, pentaerythritol tetrathioglycolate or the like. Further, as polyene, there ,ay be used the one wherein allylalcohol is added to both ends of polyurethane based on diol and diisocyanate.

Incidentally, in a case where it is crosslinkage-cured using ultraviolet rays or visible light rays, a photopolymerization initiator is preferably added to the ionizing radiation curable resin. In the case of resins having the radical polymerizable unsaturated group, as the photopolymerization initiator, there can be used independently or in combination among acetophenones, benzophenones, thioxanthones, benzoin, benzoin methyl ethers. Further, in the case of resins having the cation-polymerizable functional group, as the photopolymerization initiator, there can be used independently or in combination among aromatic diazonium salt, aromatic sulfonium salt, aromatic iodonium salt, methallocene compound, benzoin sulfonic acid ester or the like.

Incidentally, as the adding amount of each of these photopolymerization initiators, it is usually in a range of from appropriately 0.1 to appropriately 10 parts by weight per 100 parts by weight of the ionizing radiation curable resin.

Further, to the above-describedionizing radiation curable resin, various kinds of additives can be added as required. As these additives, there may be exemplified thermoplatic resin such as vinylchloride-vinylacetate copolymer, vinylacetate resin, acrylic resin, cellulose based resin or the like, extender pigment (filler) comprised of fine powder, such as calcium carbonate, barium sulfate, antifriction composition described later or the like, lubricant such as silicone resin, wax or the like, colorant such as dye, pigment or the like.

Incidentally, for the ray source of the ionizing radiation, as the ultraviolet ray source, there may be used light sources such as an ultrahigh pressure mercury lamp, high pressure mercury lamp, low pressure mercury lamp, carbon arc lamp, black light type fluorescent lamp, metal halide lamp or the like. As the wavelength of the ultraviolet rays, there is ordinarily mainly used a wavelength zone of from 190 to 380 nm.

Further, as the electron beam source, there may be used various electron beam accelerators such as a Cockcroft-walton type, Van de Graft type, resonance transformer type, insulated-core transformer type, etc., or a straight-line type, dynamitron type, high frequency type or the like. And the electron beam source that can emit electrons each having an energy of 100 to 1000 keV, preferably 100 to 300 keV and the exposure dose of electron beam is ordinarily to an extent of 20 to 150 kGy or so.

Further, as the above-described thermosetting resin, there are used two-liquid curing type urethane resin, melamine resin, epoxy resin, unsaturated polyester resin or the like.

Incidentally, the two-liquid curing type urethane resin is an urethane resin the main material of which is polyol and the cross-linking agent (curing agent) of which is isocyanate. For the polyol component having in its molecules two or more hydroxyl groups and generally available, there may be used polyethylene glycol, polypropylene glycol, acryl polyol, polyester polyol, polyether polyol, polycarbonate polyol, polyurethane polyol or the like. On the other hand, for the isocyanate component, there can be used polyisocyanate having in its molecule two or more isocyanate groups. For example, it includes aromatic isocyanates such as 2, 4-trilene diisocyanate, xylene diisocyanate, naphthalene diisocyanate, 4,4'-diphenylmethane diisocyanate, and aliphatic (or alicyclic) isocyanate such as 1,6-hexamethylene diisocyanate, isophorone diisocyanate, hydrogen added trilene diisocyanate, hydrogen added diphenyl methane diisocyanate or the like. Or there can be also used adduct or polymer of the above-described various kinds of isocyanate, which includes, for example, adduct of trilene diisocyanate, a trimer of trilene diisocyanate or the like.

It is to be noted that among the above-described isocyanates aliphatic (or alicyclic) isocyanate is preferable in that it can also provide excellent resistance to weather and excellent resistance to heat-yellowing. Concretely, for example, hexamethylene diisocyanate can be taken up.

### (Undercoat coating layer)

The undercoat coating layer 3 is formed using crosslinkage-cured resin. The non-formed portion (the portion between the adjacent curve portions) of the concavo-convex pattern 1 allows the substrate sheet 2 to be exposed if it is left as it is. Therefore, in a case where the decrease in the resistance to scratch/wear and the decrease in the resistance to stains due to that exposed portions become an obstacle to realizing the desired performance, it is preferable to provide this undercoat coating layer.

As the crosslinkage-cured resin constructing the undercoat coating layer, using a composition that is at least the same in part of its component as that constructing the concavo-convex pattern, or a composition containing resin similar to that of the concavo-convex pattern, is preferable in terms of the adherability between the concavo-convex pattern and the undercoat coating layer. Accordingly, as the resin forming the undercoat coating layer, there can be used such a crosslinkage-curable resin as stated in connection with the above-described concavo-convex pattern.

Incidentally, generally, in a case where using the two-liquid curing type urethane resin as the undercoat layer, since the adhesion of the undercoat coating layer to other layers becomes goodwith respect to a wide range of resin basedmaterials, that is advantageous when it is intended to make the resin of the undercoat coating layer and the resin of the concavo-convex pattern different from each other.

Further, in a case where the substrate sheet is made of a material having permeation property and the surface of which is coarse, such as paper, non-woven fabric cloth, etc., the undercoat coating layer may be imparted with functions of a sealer layer capable of sealing the permeation property and to make smooth (fill) the coarse surface.

The method forming the undercoat coating layer is not limited in particular. However, this layer can be formed using a known printing method such as gravureprinting, offset printing, silk screen printing, etc or the like, or using a known coating method such as roll-coating.

Incidentally, the thickness of the undercoat coating layer is ordinarily in a range of from 1 to 10 µm.

### (Designed ink layer)

Providing the designed ink layer enables a higher design of decorative sheet by the design of the layer. In this case, it is preferable that the designed ink layer be located on the downside of the concavo-convex pattern, in the respect of the durability such as wear resistance, scratch resistance, stains resistance or the like. Namely, preferably, the designed ink layer is provided between the substrate sheet and the concavo-convex pattern, or, in a case where the undercoat coating layer exists, is provided between the undercoat coating layer and the substrate sheet.

The designed ink layer 3 is a layer having formed thereon a design by using ink (or coating) and through a known printing method such as gravure printing, silk screen printing, offset printing, gravure offset printing, ink jet printing or the like. As the design, there may be taken independently or in a combined among a wood grain pattern, stone grain pattern, sand grain pattern, satin pattern, cloth grain pattern, tiling-like pattern, brick-arranged pattern, leather-print pattern, letters, geometrical pattern, solid color or the like. It is to be noted that, in the case of a solid color, the layer 3 may be formed using a known coating method such as roll-coating, gravure coating, etc.

Incidentally, the ink (or the coating solution) for use for the designed ink layer is comprised, as in the case of a general ink (or coating solution), of vehicle comprised of a binder, etc., colorant such as pigment, dye, etc., and various additives suitably added thereto. As the resin constituting the binder, there may be used as a single substance or in a mixed form, for example, cellulose based resin such as nitrocellulose, cellulose acetate, cellulose acetate propionate, etc., urethane resin, acrylic resin, vinylchloride-vinylacetate copolymer, polyester resin, alkyd resin or the like. As the colorant, there may be used, for example, inorganic pigmentssuch as titanium white, zinc white, carbon black, iron black, rouge, cadmium red, chrome yellow, titanium yellow, cobalt blue, ultramarine blue, organic pigments such as aniline black, quinacridene red, polyazored, isoindolinone yellow, benzidine yellow, phthalocyanine blue, indathrene blue or the like, flitter pigments such as scale-piece-like foil powder such as titanium oxide covered mica, shell, brass, aluminium or the like, or other dyes, etc.

Especially, by forming the designed ink layer over the entire surface (the solid printing over the entire surface) with the use of an ink containing the colorant having an opacifying property such as titanium white, carbon black (Indian ink), metal foil powder pigment or the like, the designed ink layer can be made to have the function of an opacifying layer to opacify the color tone of the receptive substrate.

### (Receptive substrate)

If laminating the decorative sheet S of the present invention having the above-described construction onto the receptive substrate B with the substrate sheet 2 thereof being opposed to the receptive substrate B, the laminate becomes the decorative member of the present invention (see Fig. 3).

The receptive substrate B is not particularly limited insofar as it has a configuration capable of laminating the decorative sheet thereon. For example, the material quality of the receptive substrate allows inorganic metalloid material, metal, wood, plastic or the like. Concretely, the examples of the inorganic metalloid material include non-pottery ceramic industrial material such as paper-making cement, extrusion cement, slag cement, ALC (lightweight foam concrete) GRC (glass fiber reinforced concrete), pulp cement, wood chip cement, asbesto cement, calcium silicate, plaster, plaster slag or the like, inorganic material such as ceramics such as earthenware, pottery, porcelain, stone tool, glass, enamel or the like. Further, the examples of metal material include iron, aluminum, copper or the like. Further, the examples of wood include veneer such as that comprised of Japanese cedar, Japanese cypress, evergreen, lauan, teak wood or the like, plywood, particle board, fiberplate, compiled material or the like. Further, the examples of plastic include resin materials such as polypropylene, ABS resin, phenol resin or the like.

Further, the configuration of the receptive substrate is a given type of ones such as a flat plate-like configuration, curved plate-like configuration, polygonal-columnar configuration or the like.

Incidentally, when laminating the decorative sheet onto the receptive substrate, according to the necessity, the adhesive can be used between the both. The adhesive is not particularly limited. The adhesive that suitably selected from among the known adhesive according to the material quality, use purpose, required physical properties, etc. of the receptive substrate may be used. For example, as the adhesive, there may be used the adhesive comprised of a thermoplastic resin such as polyamide resin, acrylic resin, vinyl acetate resin or the like, or a curable resin such as thermosetting urethane resin or the like. Coating process of the adhesive can be carried out by a known coating method such as roll-coating. It is to be noted that, regarding the adhesive, it is applied to the receptive substrate, or the decorative sheet, or each of them, and then the decorative sheet is pasted onto the receptive substrate and both are thereby laminated together.

### (Use purpose)

The use purpose of the decorative sheet and the decorative member wherein the decorative sheet is laminated on the receptive substrate, according to the present invention, is not particularly limited. However, for example, that is used as a building interior decoration material of the wall, ceiling or the like, or surface material of the building fixtures such as doors, door frames, window frames or the like, or surface material of the fixture members such as enclosure edge fittings, baseboard skirt or the like, or surface material of the furniture such as wardrobe, cabinet, desk, dining table or the like.
(1) According to the decorative sheet of the present invention, the stress that is applied from other objects coming into contact with the surface of decorative sheet is dispersed by the concavo-convex pattern, with the result that the surface becomes hard to be damaged or clawed. Further, even when the surface is clawed, those claws become unlikely to be visually noticeable by the concavo-convex pattern. For this reason, even when the concavo-convex pattern is formed of an ordinary crosslinkage-cured resin, the decorative sheet has excellent scratch resistance and wear resistance compared to a case where a decorative sheet is coated with a coating layer which is smooth and uniform in thickness over the entire surface as in the prior art. Further, the resistance to stains also enhanced. Further, the grain depression visually is difficult to notice.
(2) In addition, since providing the curve portion of the concavo-convex pattern with branching portions enables the configuration of the curve portion more isotropic and more random, it is possible to more reliably improve the scratch resistance and wear resistance while making the grain depression less noticeable.
(3) Further, by making the curve portion forming the concavo-convex pattern have a configuration of a specialized size, the concavities/convexities of the receptive substrate are modulated by such a fine concavo-convex pattern and, in addition, the concavo-convex pattern itself also becomes visually less noticeable. This visually causes the dissipation of the surface concavities/convexities of the receptive substrate. This enables more reliably improving the scratch and wear resistances while keeping the grain depression less noticeable.
(4) Further, if the undercoat coating layer comprised of crosslinkage-cured resin is provided between the substrate sheet and the concavo-convex pattern, it is possible to prevent the substrate sheet from being exposed at portions other than the curve portions of the concavo-convex pattern, prevent the decrease in scratch resistance and wear resistance due to the exposure of the substrate sheet, and prevent also the decrease in resistance of stains.
(5) Further, if the designed ink layer is provided between the substrate sheet and the concavo-convex pattern, or between the substrate sheet and the undercoat coating layer, a higher design quality of decorative sheet is obtained. In addition, the design is locatedon the downside of the concavo-convex pattern and therefore this design has excellent scratch and wear resistances as well.
(6) According to the decorative member of the present invention, it is possible to obtain the effects attributable to the decorative sheet under the items (1) to (5) above, such as the effect that the scratch resistance, wear resistance, stains resistance or the like become excellent while making the grain depression less noticeable.

### Examples

Hereinafter, the present invention will further concretely be explained using examples and comparative examples.

### (Example 1)

As the substrate sheet 2, an acrylic resin impregnated paper comprised of an L-material pulp with the basis weight of 30 g/m² was prepared. First, the ink having a composition (A) in Table 1 was applied over the entire surface of the substrate sheet in a solid pattern at a coated amount of 3 g/m² when dried by gravure printing to form a designed ink layer also serving as the opacifying or hiding layer.

Subsequently, the ink having a composition (B) in Table 1 was coated over the entire surface in a solid pattern at a coated amount of 7 g/m² when dried by the gravure printing. Then the diluted solvent was dried to set to touch (the surface being kept non-sticking), thereby forming an undercoat coating layer 3.

Subsequently, on the undercoat coating layer, an ink having a composition C in Table 1 was applied by the gravure printing to form a concavo-convex pattern 1 having an on-the-plane viewed configuration (illustrated as an enlarged view) of Fig. 2, a cross-sectional configuration of Fig. 1, and a perspective-view configuration of Fig. 3, and it was dried to remove the diluted solvent.

Thereafter, onto the printed surface side of the substrate sheet having the designed ink layer, the undercoat coating layer, and the concavo-convex pattern in the above-described way, the electron beams was radiated by means of an electron beam radiating device under the conditions of the acceleration energy 175 keV and the exposed dose 50 kGy to crosslinkage-cure the designed ink layer, the undercoat coating layer, and the concavo-convex pattern, thereby obtaining a decorative sheet in Example 1 of the present invention.

The configuration of the thus-obtained concavo-convex pattern was that, when viewed on the plane, the amplitude of the curve portion was La/2 = 0.2 to 4 mm; the circumscribed circle diameter of the curve portion was Ld = 1 to 8 mm; the width of the curve portion was Lw = 0 . 2 to 1.5 mm, and the shortest distance between adjacent two of the curve portions was Ls = 0.2 to 1 mm. On the other hand, when cross-sectionally viewed, the height of the concavo-convex pattern of the curve portion was Lh = 10 to 40 µm.

**Table 1: Composition of Ink**

| | | |
|---|---|---|
| Composition (A) | Designed ink layer | Polymethylmethacrylate based acryl polymer(Glass transition temp.: 80°C): 40 parts by weight Epoxy acrylate oligomer: 60 parts by weight Dilute solvent (methyl ethyl ketone/toluene = 1/1) : suitable amount |
| Composition (B) | Undercoat coating layer | Unsaturated polyester polyol: 50 parts by weight Saturated polyester elastomer polyol: 50 parts by weight 1,6-hexamethylene diisocyanate: 3 parts by weight Titanium white: 250 parts by weight |
| Composition (c) | Concavo-convex pattern | Epoxy acrylate oligomer: 30 parts by weight Trimethylol propane triacrylate: 70 parts by weight Silica powder (average particle size 12 µm): 5 parts by weight Aluminium hydroxide powder (spherical α-alumina of average particle size 20 µm): 5 parts by weight Silicone acrylate: 0.8 part by weight Denatured silicone: 0.2 part by weight Dilute solvent (methyl ethyl ketone/toluene = 1/1): suitable amount |

### (Example 2)

As the receptive substrate B, a lauan plywood having a thickness of 3 mm was prepared. On this receptive substrate, a vinyl acetate resin based emulsion type adhesive was applied to form an adhesive layer 4, and the decorative sheet S in Example 1 was laminated thereon in a state where the substrate sheet 2 side of the decorative sheet S was directed toward the adhesive layer side, thereby obtaining the decorative member D in Example 2 of the present invention such that as illustrated in Fig. 3 (however, there is not illustrated the designed ink layer between the undercoat layer 3 and the substrate sheet 2). or the like (Comparative example 1)

On the same substrate sheet as in Example 1, the designed ink layer and the undercoat layer were formed in the same amount of coating, and under the same printing conditions, as in Example 1 with the use of the same composition (A, B) as in Example 1.

And, on the undercoat coating layer, the same composition C as used for the concavo-convex pattern in Example 1 was applied at an uniform thickness over the entire surface to form a solid patterned coating layer which was not in the concavo-convex pattern. Concretely, a coating layer having a thickness of 2 µm when dried was formed with the use of the composition C in Table 1 by the gravure diagonal line plate reverse roll coating technique. Thereafter, the electron beam was radiated under the same conditions as in Example 1, whereby a decorative sheet in Comparative example 1 was obtained.

### (Comparative example 2)

Using the decorative sheet in Comparative example 1, and using the same receptive substrate, and the same adhesive layer, as in Example 2, and under the same conditions as in Example 2, the decorative sheet was laminated on the receptive substrate, thereby the decorative member in Comparative example 2 was obtained.

### (Comparative example 3)

In the decorative sheet of Example 1, without forming the concavo-convex pattern whatsoever, produced was a decorative sheet in which the undercoat coating layer was exposed over the entire surface. This decorative sheet was laminated on the receptive substrate under the same conditions as in Example 1, thereby a decorative member in Comparative example 3 was obtained.

### (Evaluation)

Using the decorative members of Example 2 and Comparative examples 2 and 3 as test pieces, respective tests on the wear resistance, scratch resistance, stains resistance, and confirmation of the grain depression were carried out under the same conditions through each test piece. The results were compared and evaluated.

**Table 2: Results of Performance Evaluation**

| | | | |
|---|---|---|---|
| (○: good, Δ: slightly good, X: disqualified) | | | |

| Evaluation test | Comparative Example 2 | Example 2 | Comparative Example 3 |
|---|---|---|---|
| Wear resistance test | | | |
| JAS specific plywood C test (times) | 200 | 250 | 80 |

| Scratch resistance test | | | |
|---|---|---|---|
| Hofmann scratch test (g) | 180 | 220 | 60 |

| Stains resistance test | | | |
|---|---|---|---|
| Black tea | ○ | ○ | ○ |
| Coffee | ○ | ○ | ○ |
| Milk | ○ | ○ | Δ |
| 1% iodine solution in alcohol | × | × | × |
| Vinegar | ○ | ○ | × |
| 10% citric acid aqueous solution | ○ | ○ | × |
| Gasoline | × | × | ○ |
| Acetone | × | × | × |
| Olive oil | × | ○ | × |
| 10% ammonia aqueous solution | ○ | ○ | × |
| crayon black | ○ | ○ | Δ |
| Indian ink for shoes | Δ | Δ | Δ |
| Eatable pigment red color number 102 | ○ | ○ | ○ |
| Clerical ink (blue black) | Δ | Δ | × |
| 2% mercurochrome | ○ | ○ | Δ |
| 5% carbolic acid aqueous solution | × | × | × |
| Saturated aqueous solution of acid sodium sulfite | Δ | Δ | × |
| Soy source | ○ | ○ | ○ |
| Total (the number of items (o)/the number of all items) | 10/18 | 11/18 | 5/18 |

| Confirmation on grain depression | | | |
|---|---|---|---|
| Whether the conduit grooves of the receptive substrate appear embossed on the surface with the naked eyes is confirmed | × Can be confirmed and noticeable | ○ Unable to be Confirmed and not noticeable | × Can be confirmed and noticeable |

The results are shown in Table 2. The Comparative example 2 where the surface coating layer is made uniform in thickness over its entire surface is almost excellent in terms of the respective performances of wear resistance, scratch resistance, and stains resistance. But that is insufficient in terms of the grain depression performance. Further, the Comparative example 3 where there is no concavo-convex pattern is insufficient in terms of any one of those performances.

On the other hand, the Example 2 where the surface coating film is formed in a concavo-convex pattern can exhibit improvements in terms of all of those performances. Namely, excellent performances are obtained.

## Claims

1. A decorative sheet comprising a substrate sheet and a concavo-convex pattern which is formed on the substrate sheet and is upwardly convexed when cross-sectionally viewed **characterized in that** the concavo-convex pattern is composed of an aggregate of curve portions each of which is made of a crosslinkage-cured resin and formed in a continuous curve which meanders with a finite length when viewed on the plane.

2. A decorative sheet according to claim 1, wherein the curve portion is provided with a branch which branches off in mid course of the curve portion and meanders or does not meander.

3. A decorative sheet according to claim 1 or 2, wherein, when viewed on the plane, the width of the curve portion is in a range of from 0.1 to 1.5 mm, the diameter of the circumscribed circle encompassing the curve portion is in a range of from 1 to 10 mm, and the shortest distance between adjacent two of the curve portions is in a range of from 0.1 to 1 mm; and, when cross-sectionally viewed, the height of the curve portion is in a range of from 5 to 50 µm.

4. A decorative sheet according to any one of claim 1 to 3, wherein the decorative sheet further comprises an undercoat layer made of the crosslinkage-cured resin between the substrate sheet and the concavo-convex pattern.

5. A decorative sheet according to any one of claims 1 to 4, wherein the decorative sheet further comprises a designed ink layer between the substrate sheet and the concavo-convex pattern or between the substrate sheet and the undercoat layer.

6. A decorative member comprising a receptive substrate and a decorative sheet according to any one of claims 1 to 5, **characterized in that** the decorative sheet is laminated on the receptive substrate so as to oppose the substrate sheet of the decorative sheet to the receptive substrate.

7. A decorative member according to claim 6, wherein the curve portion is provided with a branch which branches off in mid course of the curve portion and meanders or does not meander.

8. A decorative member according to claim 6 or 7, wherein, when viewed on the plane, the width of the curve portion is in a range of from 0.1 to 1.5 mm, the diameter of the circumscribed circle encompassing the curve portion is in a range of from 1 to 10 mm, and the shortest distance between adjacent two of the curve portions is in a range of from 0.1 to 1 mm; and, when cross-sectionally viewed, the height of the curve portion is in a range of from 5 to 50 µm.

9. A decorative member according to any one of claims 6 to 8, wherein the decorative sheet further comprises an undercoat layer made of the crosslinkage-cured resin between the substrate sheet and the concavo-convex pattern.

10. A decorative member according to any one of claims 6 to 9, wherein the decorative sheet further comprises a designed ink layer between the substrate sheet and the concavo-convex pattern or between the substrate sheet and the undercoat layer.

## Patentansprüche

1. Dekorfolie, die eine Substratfolie sowie ein konkav-konvexes Muster umfasst, das auf der Substratfolie ausgebildet und in Querschnittsansicht nach obenhin gewölbt ist, **dadurch gekennzeichnet, dass** das konkavkonvexe Muster aus einem Aggregat von Krümmungsabschnitten besteht, die jeweils aus einem quervernetzt-ausgehärteten Harz bestehen und als kontinuierliche Kurve ausgebildet sind, welche in der Draufsicht auf einer endlichen Länge gewunden verläuft.

2. Dekorfolie nach Anspruch 1, wobei der Krümmungsabschnitt mit einer Verzweigung versehen ist, der sich im Verlauf des Krümmungsabschnitts mittig verzweigt und gewunden oder auch nicht gewunden verläuft.

3. Dekorfolie nach Anspruch 1 oder Anspruch 2, wobei die Breite des Kurvenabschnitts in der Draufsicht im Bereich von 0,1 bis 1,5 mm liegt, der Durchmesser des den Krümmungsabschnitt einschließenden umschriebenen Kreises im Bereich von 1 bis 10 mm liegt und die kürzeste Distanz zwischen zwei benachbarten Krümmungsabschnitten im Bereich von 0,1 bis 1 mm liegt sowie die Höhe des Krümmungsabschnitts in Querschnittsansicht im Bereich von 5 bis 50 µm liegt.

4. Dekorfolie nach einem der Ansprüche 1 bis 3, wobei die Dekorfolie weiterhin eine Grundierungsschicht umfasst, die aus einem quervernetzt-ausgehärteten Harz zwischen der Substratfolie und dem konkav-konvexen Muster besteht.

5. Dekorfolie nach einem der Ansprüche 1 bis 4, wobei die Dekorfolie weiterhin eine zwischen der Substratfolie und dem konkav-konvexen Muster oder zwischen der Substratfolie und der Grundierungsschicht vorgesehene Tintenschicht umfasst.

6. Zierelement, das ein Aufnahme-Substrat sowie eine Dekorfolie nach einem der Ansprüche 1 bis 5 umfasst, **dadurch gekennzeichnet, dass** die Dekorfolie auf das Aufnahme-Substrat auflaminiert ist, damit die Substratfolie der Dekorfolie entgegengesetzt zum Aufnahme-Substrat liegt.

7. Zierelement nach Anspruch 6, wobei der Krümmungsabschnitt mit einer Verzweigung versehen ist, die sich im Verlauf des Krümmungsabschnitts mittig verzweigt und gewunden oder auch nicht gewunden verläuft.

8. Zierelement nach Anspruch 6 oder 7, wobei die Breite des Kurvenabschnitts in der Draufsicht im Bereich von 0,1 bis 1,5 mm liegt, der Durchmesser des den Krümmungsabschnitt einschließenden umschriebenen Kreises im Bereich von 1 bis 10 mm liegt und die kürzeste Distanz zwischen zwei benachbarten Krümmungsabschnitten im Bereich von 0,1 bis 1 mm liegt sowie die Höhe des Krümmungsabschnitts in Querschnittsansicht im Bereich von 5 bis 50 µm liegt.

9. Zierelement nach einem der Ansprüche 6 bis 8, wobei die Dekorfolie weiterhin eine Grundierungsschicht umfasst, die aus einem quervernetzt-ausgehärteten Harz zwischen der Substratfolie und dem konkav-konvexen Muster besteht.

10. Zierelement nach einem der Ansprüche 6 bis 9, wobei die Dekorfolie weiterhin eine zwischen der Substratfolie und dem konkav-konvexen Muster oder zwischen der Substratfolie und der Grundierungsschicht vorgesehene Tintenschicht umfasst.

## Revendications

1. Feuille décorative comprenant une feuille de substrat et un motif concavo-convexe qui est formé sur la feuille de substrat et qui est convexe vers le haut quand il est observé en coupe, **caractérisée en ce que** le motif concavo-convexe est composé d'un agrégat de parties courbes, chacune étant composée d'une résine durcie pouvant être réticulée et formée en une courbe continue qui serpente avec une longueur finie quand elle est observée sur le plan.

2. Feuille décorative selon la revendication 1, dans laquelle la partie courbe est pourvue d'une ramification qui bifurque à mi-chemin de la partie courbe et qui serpente ou qui ne serpente pas.

3. Feuille décorative selon la revendication 1 ou 2, dans laquelle quand elle est observée sur le plan, la largeur de la partie courbe est située dans une plage allant de 0, 1 mm à 1,5 mm, le diamètre du cercle circonscrit englobant la partie courbe est situé dans une plage allant de 1 mm à 10 mm, et la distance la plus courte entre deux parties courbes adjacentes est située dans une plage allant de 0,1 mm à 1 mm et quand elle est observée en coupe, la hauteur de la partie courbe est située dans une plage allant de 5 µm à 50 µm.

4. Feuille décorative selon l'une quelconque des revendications 1 à 3, dans laquelle la feuille décorative comprend en outre une sous-couche composée d'une résine durcie pouvant être réticulée entre la feuille de substrat et le motif concavo-convexe.

5. Feuille décorative selon l'une quelconque des revendications 1 à 4, dans laquelle la feuille décorative comprend en outre une couche d'encre appliquée entre la feuille de substrat et le motif concavo-convexe ou entre la feuille de substrat et la sous-couche.

6. Elément décoratif comprenant un substrat réceptif et une feuille décorative selon l'une quelconque des revendications 1 à 5, **caractérisé en ce que** la feuille décorative est stratifiée sur le substrat réceptif de manière à ce que la feuille de substrat de la feuille décorative soit opposée au substrat réceptif.

7. Elément décoratif selon la revendication 6, dans lequel la partie courbe est pourvue d'une ramification qui bifurque à mi-chemin de la partie courbe et qui serpente ou qui ne serpente pas.

8. Elément décoratif selon la revendication 6 ou 7, dans lequel quand elle est observée sur le plan, la largeur de la partie courbe est située dans une plage allant de 0,1 mm à 1,5 mm, le diamètre du cercle circonscrit englobant la partie courbe est situé dans une plage allant de 1 mm à 10 mm, et la distance la plus courte entre deux parties courbes adjacentes est située dans une plage allant de 0,1 mm à 1 mm et quand elle est observée en coupe, la hauteur de la partie courbe est située dans une plage allant de 5 µm à 50 µm.

9. Elément décoratif selon l'une quelconque des revendications 6 à 8, dans lequel la feuille décorative comprend en outre une sous-couche composée d'une résine durcie pouvant être réticulée entre la feuille de substrat et le motif concavoconvexe.

10. Elément décoratif selon l'une quelconque des revendications 6 à 9, dans laquelle la feuille décorative comprend en outre une couche d'encre appliquée entre la feuille de substrat et le motif concavo-convexe ou entre la feuille de substrat et la sous-couche.
